# EUROPEAN PATENT APPLICATION

(11) **EP 4 471 967 A1**
(43) Date of publication of application: **04.12.2024**
(21) Application number: 22961816.0
(22) Date of filing: 14.10.2022
(51) Int. Cl.: H01M 50/503, H01M 50/59, H01M 50/586, H01M 50/107

(54) **BATTERY CELL, BATTERY AND ELECTRIC DEVICE**

(71) Applicant: Contemporary Amperex Technology Co., Limited, Ningde, Fujian 352100 (CN)
(72) Inventor: CHEN, Shengwang, Ningde, Fujian 352100 (CN); GUO, Zhijun, Ningde, Fujian 352100 (CN); WANG, Peng, Ningde, Fujian 352100 (CN)
(74) Representative: Ran, Handong
(86) International application number: PCT/CN2022/125515
(87) International publication number: WO 2024/077630

(57) **Abstract**

The embodiments of the present application belong to the technical field of batteries. Provided are a battery cell, a battery and an electric device. The battery cell comprises a housing, an electrode terminal, an electrode assembly, a current-collecting member and an insulating member, wherein the housing has a wall portion; the electrode terminal is arranged on the wall portion; the electrode assembly is arranged in the housing and has a first tab; the current-collecting member connects the first tab with the electrode terminal; the insulating member is arranged between the current-collecting member and the wall portion and is used for insulating and isolating the current-collecting member from the wall portion; and in the thickness direction of the wall portion, the insulating member has a first surface which faces and is closest to the current-collecting member, and a projection of an outer edge of the current-collecting member is located in the first surface. The first surface can play a limiting role on the current-collecting member, thereby reducing the deformation of the current-collecting member in a direction approaching the wall portion, reducing the risk of staggering of positive and negative electrode sheets of the electrode assembly due to excessive deformation of the current-collecting member, and effectively improving the safety of the battery cell.

## Description

### Technical Field

The present disclosure relates to the field of battery technology, and in particular to a battery cell, a battery, and an electrical equipment.

### Background Art

The batteries are widely used in electrical equipment, such as mobile phones, laptops, battery cars, electric vehicles, electric aircraft, electric boats, electric toy cars, electric toy boats, electric toy planes and electric tools.

In battery technology, it is not only necessary to consider the performance of battery cells, but also the safety of battery cells. Therefore, how to improve the safety of battery cells is an urgent technical problem that needs to be solved.

### Summary

The embodiments of the present disclosure provide a battery cell, a battery, and an electrical equipment, which can effectively improve the safety of the battery cell.

In the first aspect, the embodiment of the present disclosure provides a battery cell, comprising a shell, an electrode terminal, an electrode assembly, a current collector component, and an insulating member, wherein the shell has a wall portion; the electrode terminal is set on the wall portion; the electrode assembly is arranged inside the shell, and the electrode assembly has a first tab; the current collector component is connected to the first tab and the electrode terminal; and the insulating member is set between the current collector component and the wall portion, and is configured to insulate and isolate the current collector component and the wall portion, wherein along the thickness direction of the wall portion, the insulating member has a first surface facing and closest to the current collector component, and the projection of the outer edge of the current collector component is located inside the first surface.

In the above technical solution, the projection of the outer edge of the current collector component is located inside the first surface, such that the first surface can limit the current collector component to reduce the deformation of the current collector component towards a direction close to the wall portion, thereby reducing the risk of misalignment of the positive and negative electrode plates of the electrode assembly caused by excessive deformation of the current collector component, and effectively improving the safety of the battery cell.

In some embodiments, the diameter of the outer edge of the current collector component is Ri, and the outer diameter of the first surface is R₂, satisfying R₂ ≥ R₁. This can make it easier to achieve the projection of the outer edge of the current collector component located within the first surface, so that the first surface can effectively restrict the current collector component and reduce the deformation of the current collector component.

In some embodiments, along the thickness direction, the current collector component has a second surface facing and closest to the first surface, with the electrode terminal protruding from the second surface, wherein the area of the overlap area between the projection of the first surface and the projection of the second surface is S₁, and the area of the second surface is S₂, meeting 0.25 ≤ S₁/S₂ ≤ 0.8. If S₁/S₂ is less than 0.25, the contact area between the second surface and the first surface is smaller during the deformation of the current collector component, which makes the insulating member have poor limiting ability on the current collector component. If S₁/S₂ is larger than 0.8, the radial size of the current collector component is larger. After the central area of the current collector component is subjected to the squeezing force of the electrode terminal, the degree of warping of the outer edge of the current collector component increases, and the deformation of the outer edge area of the current collector component increases, resulting in an increased risk of misalignment of the positive and negative electrodes of the electrode assembly. Therefore, a value of 0.25 ≤ S₁/S₂ ≤ 0.8 can make the insulating member better limit the current collector component to reduce the deformation of the current collector component.

In some embodiments, 0.4 ≤ S₁/S₂ ≤ 0.6. It further reduces the deformation of the current collector component.

In some embodiments, the first surface is configured to abut against the current collector component when the current collector component deforms in a direction close to the wall portion. When the current collector component deforms in the direction close to the wall portion, the first surface can provide support for the current collector component, thereby limiting further deformation of the current collector component and achieving the goal of reducing deformation of the current collector component.

In some embodiments, along the thickness direction, the electrode terminal has a third surface facing and closest to the current collector component, wherein the third surface is configured to abut against the current collector component, and the third surface is closer to the current collector component than the first surface. Due to the fact that the third surface is closer to the current collector component than the first surface, the third surface of the electrode terminal can contact with the current collector component, thereby reducing the risk that the third surface of the electrode terminal cannot contact with the current collector component due to the interference between the current collector component and the insulating member.

In some embodiments, along the thickness direction, the current collector component has a second surface facing and closest to the first surface, with the electrode terminal protruding from the second surface, wherein the distance between the second surface and the first surface is D, satisfying 0 ≤ D ≤ 0.5mm. If D>0.5mm, the distance between the first and second surfaces is larger, and there is more space for the current collector component to deform in the direction close to the wall portion between the first and second surfaces, resulting in a larger deformation of the current collector component in the direction close to the wall portion. In addition, if the distance between the first surface and the second surface is larger, it creates a larger gap between the current collector component and the insulating member, which reduces the size of the electrode assembly in the thickness direction, and affects the energy density of the battery cell. Therefore, 0 ≤ D ≤ 0.5mm, which reduces the distance between the first surface and the second surface, so that the current collector component can abut against the first surface with just a small deformation in a direction close to the wall portion, so as to limit the further deformation of the current collector component, reduce the deformation of the current collector component, and make the internal structure of the battery cell more compact, thereby improving the utilization rate of the internal space of the battery cell, which is conducive to improving the energy density of the battery cell.

In some embodiments, the electrode terminal comprises a body part, a first limit part, and a second limit part, wherein along the thickness direction, the first limit part and the second limit part are respectively connected to the two ends of the body part; the first limit part abuts against the current collector component; the body part passes through the wall portion; the wall portion is at least partially located between the first limit part and the second limit part to limit the relative movement of the electrode terminal to the wall portion; and the first surface is set around the first limit part. The first surface can limit the part of the current collector component located around the first limit part. When the central area of the current collector component is subjected to the squeezing force of the first limit part, the part of the current collector component located around the first limit part deforms towards the direction near the wall portion. The first surface can provide support for the part of the current collector component located around the first limit part, so as to reduce the deformation of the part of the current collector component located around the first limit part towards the direction near the wall portion.

In some embodiments, the insulating member is provided with a concave part, which is recessed from the first surface in a direction away from the current collector component, and at least a portion of the first limit part is accommodated within the concave part. The setting of the concave part on the insulating member can, on the one hand, reduce the overall size of the insulating member and the first limit part in the thickness direction, thereby making the internal structure of the battery cell more compact, improving the utilization rate of the internal space of the battery cell, and being conducive to improving the energy density of the battery cell. On the other hand, it can reduce the thickness of the part where the first limit part protrudes from the first surface, reduce the distance between the current collector component and the first surface, and enable the first surface to better limit the deformation of the current collector component.

In some embodiments, along the thickness direction, the surface of the first limit part that is away from the second limit part is the third surface, wherein the third surface abuts against the current collector component, and the third surface is closer to the current collector component than the first surface. In this way, it can reduce the risk that the third surface of the electrode terminal is unable to contact the current collector component due to the interference between the current collector component and insulating member.

In some embodiments, the first tab is welded to the current collector component; and/or the electrode terminal is welded to the current collector component. The welding connection between the first tab and the current collector component can ensure the firmness of the connection between the first tab and the current collector component, and achieve stable current flow between the first tab and the current collector component. The welding connection between the electrode terminal and the current collector component can ensure the firmness of connection between the electrode terminal and the current collector component, and achieve stable current flow between the electrode terminal and the current collector component.

In some embodiments, the shell comprises a casing and an end cover; the casing includes a side wall and a wall portion integrally formed, with the side wall surrounding the wall portion; along the thickness direction, the wall portion is set at one end of the side wall, the other end of the side wall forms an opening, and the end cover closes the opening. The electrode terminal is set on the wall portion integrally formed with the side wall of the casing, which is not easy to cause separation between the wall portion and the side wall when the battery cell is subjected to a force form the external components.

In some embodiments, the shell comprises a casing and an end cover, wherein along the thickness direction, one end of the casing forms an opening, the end cover closes the opening, and the end cover is the wall portion. The electrode terminal is set on the end cover to improve the assembly efficiency of the battery cell.

In some embodiments, the shell is a cylindrical shell. The cylindrical shell is suitable for cylindrical battery cell.

In the second aspect, a battery comprises a battery cell provided in any one embodiment of the first aspect.

In the third aspect, an electrical equipment comprises a battery provided in any one embodiment of the second aspect.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an exploded view of the battery cell provided in some embodiments of the present disclosure;
FIG. 4 is a structural schematic view of the battery cell shown in FIG. 3;
FIG. 5 is a partial view of the battery cell shown in FIG. 4;
FIG. 6 is a bottom view of the current collector component and the insulating member shown in FIG. 5;
FIG. 7 is a view showing the position relationship between the current collector component and the insulating member shown in FIG. 5;
FIG. 8 is a partial enlarged view of the A position of the battery cell shown in FIG. 5;
FIG. 9 is a structural schematic view of the electrode terminal shown in FIG. 5;
FIG. 10 is a schematic view of a structure of the battery cell provided in some other embodiments of the present disclosure;
FIG. 11 is a partial view of the battery cell shown in FIG. 10; and
FIG. 12 is a schematic view of a structure of the battery cell provided in some other embodiments of the present disclosure;

Reference signs: 1-shell; 11-casing; 111-wall portion; 112-side wall; 12-end cover; 2-electrode assembly; 21-first tab; 22-second tab; 3-electrode terminal; 31-third surface; 32-body part; 33-first limit part; 34-second limit part; 35-step hole; 36-liquid injection hole; 4-current collector component; 41-outer edge; 42-second surface; 5-insulating member; 51-first surface; 51 1-edge line; 52-first through-hole; 53-concave part; 6-sealing member; 7-blocking member; 10-battery cell; 20-box; 201-first part; 202-second part; 100-battery; 200-controller; 300-motor; 1000-vehicle; C-overlap area; and Z-thickness direction.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the present disclosure, the battery cell can include a lithium ion secondary battery, a lithium ion primary battery, a lithium sulfur battery, a sodium lithium ion battery, a sodium ion battery or a magnesium ion battery, etc., which is not limited by the embodiments of the present disclosure. The battery cell can be cylindrical, flat, or rectangular, or be of other shapes, which is also not limited by the embodiments of the present disclosure. Battery cells are generally divided into three types according to the packaging method: cylindrical battery cell, square battery cell, and soft pack battery cell, which is also not limited by the embodiments of the present disclosure.

The battery mentioned in the embodiments of the present disclosure refers to a single physical module that includes one or more battery cells to provide higher voltage and capacity. For example, the batteries mentioned in the present disclosure may include battery modules or battery packs, etc. The battery generally includes a box used to encapsulate one or more battery cells. The box can prevent liquids or other foreign objects from affecting the charging or discharging of battery cells.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector, and the positive electrode current collector without the positive electrode active substance layer protrudes from the positive electrode current collector coated by the positive electrode active substance layer. The positive electrode current collector without the positive electrode active substance layer is used as the positive tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector, and the negative electrode current collector without the negative electrode active substance layer protrudes from the negative electrode current collector coated by the negative electrode active substance layer. The negative electrode current collector without the negative electrode active substance layer is used as the negative tab. The material for the negative electrode current collector can be copper, and the active substance of the negative electrode can be carbon, silicon or the like. In order to ensure that fusing does not occur under a high current, multiple positive tabs are provided and stacked together, and multiple negative tabs are provided and stacked together. The material of the separator can be PP (polypropylene) or PE (polyethylene), etc. In addition, the electrode assembly can be of a wound structure or a laminated structure (stacked structure), which is not limited by the embodiments of the present disclosure.

The inventor noticed that during the assembly of battery cells, the current collector component may undergo a relatively large deformation due to the force exerted by the electrode terminals on the current collector component. The deformation of the current collector component may cause the tabs connected to the current collector component to move, resulting in misalignment between the positive and negative electrode plates of the electrode assembly, which can easily lead to the risk of the short circuit within the battery cell and affect the safety of the battery cell.

In view of this, the embodiments of the present disclosure provide a battery cell, wherein an insulating member is provided between the current collector component and the wall portion of the shell. The insulating member has a first surface facing the current collector component, and the projection of the outer edge of the current collector component is located within the first surface.

In such a battery cell, the projection of the outer edge of the current collector component is located within the first surface, which allows the first surface to limit the warping of the current collector component in the direction near the wall portion, reduce the deformation of the current collector component, reduce the risk of misalignment between positive and negative electrodes of the electrode assembly caused by the deformation of the current collector component, and effectively improve the safety of the battery cell.

The battery cell described in the embodiments of the present disclosure is applicable to batteries and electrical equipment using batteries.

The electrical equipment can be a vehicle, a mobile phone, a portable device, a notebook computer, a ship, a spacecraft, an electric toy, an electric tool, and the like. The vehicle can be a fuel vehicle, a gas vehicle, or a new energy vehicle. The new energy vehicle can be a pure electric vehicle, a hybrid electric vehicle, a range extended vehicle, or the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present disclosure.

For ease of description, the following embodiments will be described by taking an electrical equipment being a vehicle as an example.

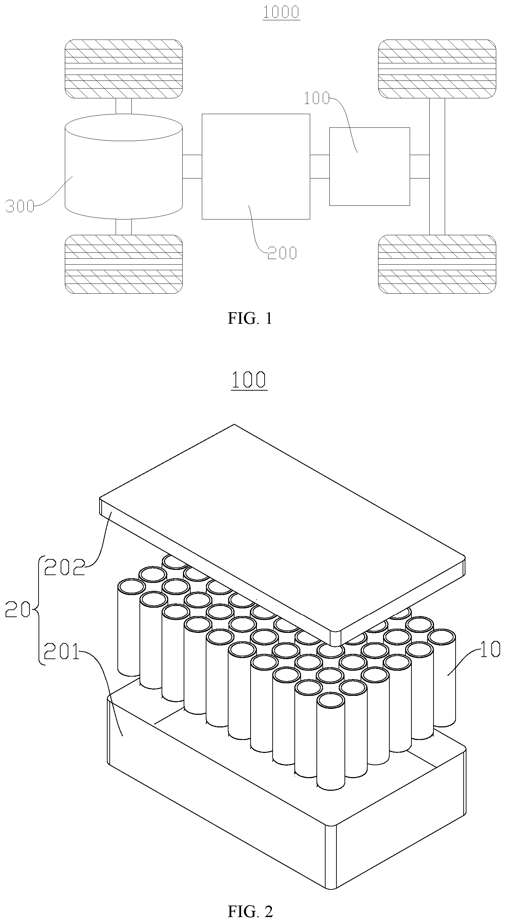

Referring to FIG. 1, FIG. 1 is a structural schematic view of the vehicle 1000 provided in some embodiments of the present disclosure. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure. The battery 100 includes a battery cell 10 and a box 20, which is used to accommodate the battery cell 10.

In the above, the box 20 is a component that accommodates the battery cell 10, and the box 20 provides an accommodating space for the battery cell 10. The box 20 can be of various structures. In some embodiments, the box 20 may include a first part 201 and a second part 202, with the first part 201 and the second part 202 covering each other, so as to define an accommodating space for accommodating the battery cell 10. The first part 201 and the second part 202 can be of various shapes, such as cuboid, cylinder, etc. The first part 201 can be of a hollow structure with one side opened, and the second part 202 can also be of a hollow structure with one side opened. The opened side of the second part 202 covers the opened side of the first part 201, so as to form a box 20 with accommodating space. It can also be that the first part 201 is of a hollow structure with one side opened, the second part 202 is of a plate-like structure, and the second part 202 covers the opened side of the first part 201, so as to form a box 20 with accommodating space. The first part 201 and the second part 202 can be sealed through sealing elements, which can be sealing rings, sealants, etc.

In battery 100, one or multiple battery cells 10 can be provided. If multiple battery cells 10 are provided, the multiple battery cells 10 can be connected in series, parallel, or hybrid. Hybrid connection means that both series connection and parallel connection exist among multiple battery cells 10. It is possible that multiple battery cells 10 are first connected in series, parallel, or hybrid to form a battery module, and multiple battery modules are then connected in series, parallel, or hybrid to form a whole to be accommodated in the box 20. Alternatively, all battery cells 10 can be directly connected in series, parallel, or hybrid together, and then the entire body composed of all battery cells 10 can be accommodated in the box 20.

In some embodiments, battery 100 may also include a busbar component, and multiple battery cells 10 may be electrically connected through the busbar component, so as to achieve series, parallel, or hybrid connection of multiple battery cells 10. The busbar component can be metal conductors, such as copper, iron, aluminum, stainless steel, and aluminum alloy.

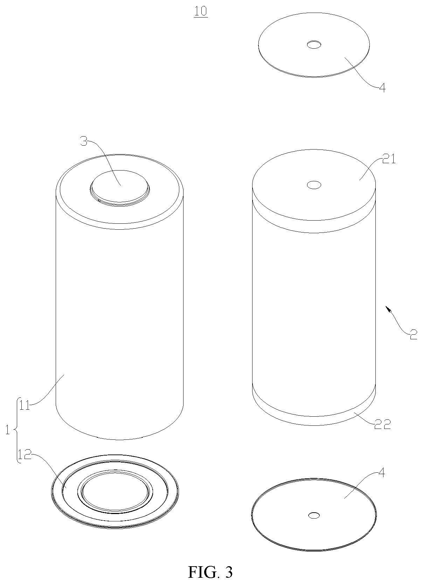

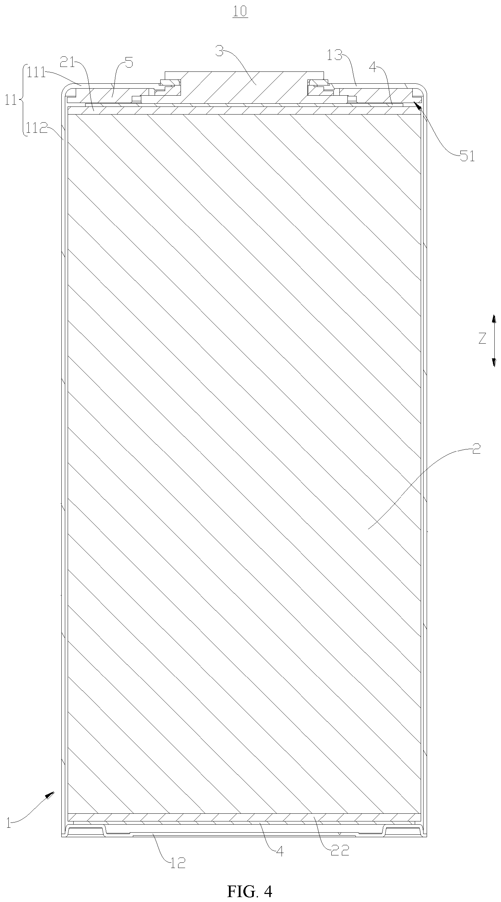

Referring to FIGS. 3 and 4, FIG. 3 is an exploded view of the battery cell 10 provided in some embodiments of the present disclosure; and FIG. 4 is a structural schematic view of the battery cell 10 shown in FIG. 3. The battery cell 10 can include a shell 1, an electrode assembly 2, an electrode terminal 3 and a current collector component 4.

The shell 1 is used to accommodate electrode assembly 2, electrolyte, and other components. The shell 1 may include casing 11 and end cover 12, wherein the end cover 12 covers the opening of casing 11. The end cover 12, together with casing 11, defines a space for accommodating electrode assembly 2, electrolyte, and other components.

The casing 11 can be of a hollow structure with one end forming an opening, and the casing 11 can also be of a hollow structure with two opposite ends forming openings. The casing 11 can be of various shapes, such as cylinder, cuboid, etc. The material of casing 11 can be various, such as copper, iron, aluminum, steel, aluminum alloy, etc.

The end cover 12 is a component that covers the opening of the casing 11 to isolate the internal environment of the battery cell 10 from the external environment. The shape of the end cover 12 can match the shape of the casing 11. For example, the casing 11 is of a cuboid structure, and the end cover 12 is of a rectangular plate-like structure matching the casing 11. For another example, as shown in FIGS. 3 and 4, the casing 11 is of a cylindrical structure, and the end cover 12 is of a circular plate-like structure matching the casing 11. The material of end cover 12 can also be various, such as copper, iron, aluminum, steel, aluminum alloy, etc. The end cover 12 and the casing 11 can be made of the same material or different materials.

In shell 1, one or two end covers 12 can be provided. For example, the casing 11 is of a hollow structure with openings formed at two opposite ends, and two end covers 12 can be correspondingly set, each of which closes the two openings of the casing 11. For another example, as shown in FIGS. 3 and 4, the casing 11 is of a hollow structure with one end having an opening, and one end cover 12 can be correspondingly set, with one end cover 12 closing one opening of the casing 11.

The electrode assembly 2 is a component in the battery cell 10 that undergoes electrochemical reactions. The electrode assembly 2 can include a positive electrode plate, a negative electrode plate, and a separator. The electrode assembly 2 can be in a wound structure formed by winding the positive electrode plate, the separator, and the negative electrode plate, or a stacked structure formed by stacking the positive electrode plate, the separator, and the negative electrode plate. Electrode assembly 2 has the first tab 21 and the second tab 22 with opposite polarities, one of which is the positive tab and the other one is the negative tab. The positive tab can be the part of the positive electrode plate that is not coated with a positive electrode active substance layer, and the negative tab can be the part of the negative electrode plate that is not coated with a negative electrode active substance layer.

The electrode terminal 3 is a component in the battery cell 10 used to connect with external components (such as a busbar component) to output the electrical energy of the battery cell 10. The electrode terminal 3 can be set on the casing 11 or on the end cover 12. As shown in FIG. 4, taking the example that the casing 11 is of a hollow structure with one end having an opening, the electrode terminal 3 is set on the wall of the casing 11 opposite to the end cover 12. The electrode terminal 3 is electrically connected to the first tab 21, and the end cover 12 is electrically connected to the second tab 22.

The current collector component 4 is a conductor, which can be made of copper, iron, aluminum, steel, aluminum alloy and other materials. The current collector component 4 can be of a disc structure set inside the shell 1. For example, as shown in FIG. 4, the electrode terminal 3 is connected to the first tab 21 through one current collector component 4, and the end cover 12 is connected to the second tab 22 through another current collector component 4.

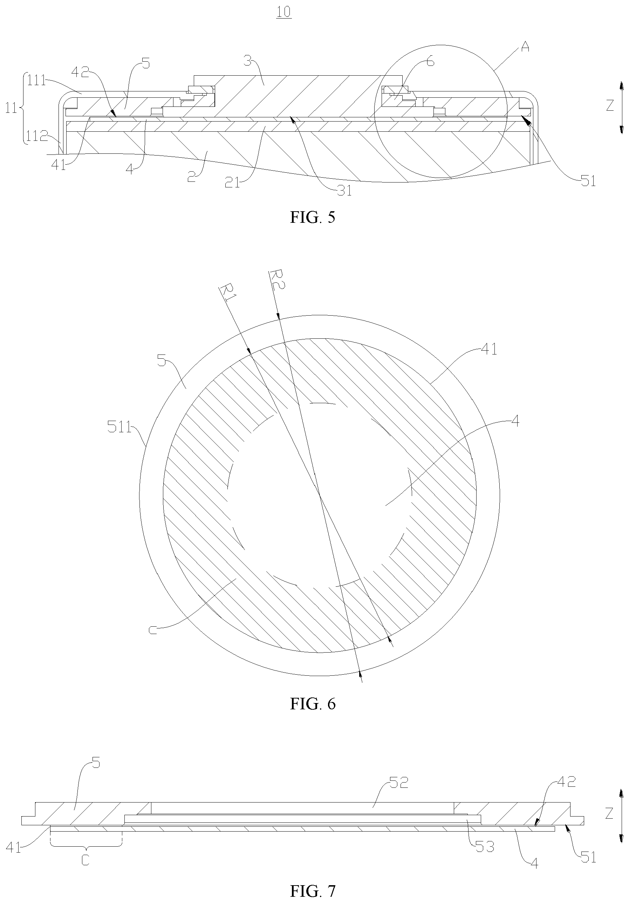

Referring to FIG. 5, FIG. 5 is a partial view of the battery cell 10 shown in FIG. 4. The embodiment of the present disclosure provides a battery cell 10, which comprises a shell 1, an electrode assembly 2, an electrode terminal 3, a current collector component 4, and an insulating member 5. The shell 1 has a wall portion 111, and electrode terminal 3 is provided on the wall portion 111. The electrode assembly 2 is located inside the shell 1, and has a first tab 21. The current collector component 4 is connected to the first tab 21 and the electrode terminal 3. The insulating member 5 is installed between the current collector component 4 and the wall portion 111, and is used to insulate and isolate the current collector component 4 and the wall portion 111. Along the thickness direction Z of the wall portion 111, the insulating member 5 has a first surface 51 facing and closest to the current collector component 4, and the projection of the outer edge 41 of the current collector component 4 is located within the first surface 51.

The wall portion 111 can be the end cover 12 in the shell 1. The wall portion 111 can also be one wall in the casing 11 of the shell 1, for example, the wall portion 111 is the wall opposite to the end cover 12 in the casing 11 of the shell 1.

The first tab 21 of electrode assembly 2 can be a positive tab or a negative tab. That is to say, the tab electrically connected to electrode terminal 3 in electrode assembly 2 can be a positive tab or a negative tab.

The current collector component 4 is connected to the first tab 21 and the electrode terminal 3 to achieve electrical connection between the electrode terminal 3 and the first tab 21. There are various connection methods between electrode terminal 3 and current collector component 4, such as welding, bonding with conductive adhesive, etc., so as to fix electrode terminal 3 and current collector component 4. There are various ways to connect the first tab 21 to the current collector component 4, such as welding, bonding with conductive adhesive, etc., so as to fix the first tab 21 to the current collector component 4.

The insulating member 5 is installed between the current collector component 4 and the wall portion 111. The insulating member 5 not only achieves insulation between the current collector component 4 and the wall portion 111, but also limits the deformation of the current collector component 4. The insulating member 5 is made of insulating materials, such as rubber, plastic, etc.

The first surface 51 is the surface of insulating member 5 facing the current collector component 4 along the thickness direction Z, which is also the surface of insulating member 5 closest to the current collector component 4 along the thickness direction Z. The first surface 51 can be a plane perpendicular to the thickness direction Z. Along the thickness direction Z, the current collector component 4 can be pressed against the first surface 51 or set with a gap with the first surface 51. The outer edge 41 of the current collector component 4 is the edge of the current collector component 4 that is farthest from the centerline and surrounds the centerline. Taking the current collector component 4 being a disc structure as an example, the edge of the surface of the current collector component 4 facing the first surface 51 can be the outer edge 41 of the current collector component 4.

The projection of the outer edge 41 of the current collector component 4 along the thickness direction Z is a closed curve within the first surface 51, which can be at a distance from the edge line 511 of the first surface 51 or partially or completely overlap with the edge line 511 of the first surface 51 (not shown in FIG. 5).

In the embodiments of the present disclosure, the projection of the outer edge 41 of the current collector component 4 is located inside the first surface 51, such that the first surface 51 can limit the current collector component 4 to reduce the deformation of the current collector component 4 towards a direction close to the wall portion 111, thereby reducing the risk of misalignment of the positive and negative electrode plates of the electrode assembly 2 caused by excessive deformation of the current collector component 4, and effectively improving the safety of the battery cell 10.

In some embodiments, referring to FIG. 6, FIG. 6 is a bottom view of the current collector component 4 and the insulating member 5 shown in FIG. 5. The diameter of the outer edge 41 of the current collector component 4 is R₁, and the outer diameter of the first surface 51 is R₂, satisfying R₂ ≥ R₁.

The edge line 511 of the first surface 51 is circular, and the diameter of the edge line 511 of the first surface 51 is the outer diameter of the first surface 51. The current collector component 4 is in a disc shape, and the outer edge 41 of the current collector component 4 is circular. The diameter of the outer edge 41 of the current collector component 4 is the outer diameter of the current collector component 4.

If R₂=R₁, the current collector component 4 and the insulating member 5 can be set coaxially. The projection of the outer edge 41 of the current collector component 4 along the thickness direction Z coincides with the edge line 511 of the first surface 51, thereby achieving the projection of the outer edge 41 of the current collector component 4 along the thickness direction Z located within the first surface 51. As shown in FIG. 6, if R₂ > R₁, it is also possible to set the current collector component 4 and the insulating member 5 coaxially, so that the projection of the outer edge 41 of the current collector component 4 along the thickness direction Z is concentric and at a distance from the edge line 511 of the first surface 51. It is also possible to achieve the projection of the outer edge 41 of the current collector component 4 along the thickness direction Z located within the first surface 51.

In this embodiment, R₂ ≥ R₁, which can make it easier to achieve the projection of the outer edge 41 of the current collector component 4 located within the first surface 51, so that the first surface 51 can better restrict the current collector component 4 and reduce the deformation of the current collector component 4.

In some embodiments, referring to FIGS. 5-7, FIG. 7 is a view showing the position relationship between the current collector component 4 and the insulating member 5 shown in FIG. 5. Along the thickness direction Z, the current collector component 4 has a second surface 42 facing and closest to the first surface 51. The electrode terminal 3 protrudes from the second surface 42. The area of the overlap area C between the projection of the first surface 51 and the projection of the second surface 42 is S₁, and the area of the second surface 42 is S₂, satisfying 0.25 ≤ S₁/S₂ ≤ 0.8.

S₁/S₂ can be 0.25, 0.3, 0.35, 0.4, 0.45, 0.5, 0.55, 0.6, 0.65, 0.7, 0.75, 0.8, etc. The shaded area in FIG. 6 is the overlap area C.

The second surface 42 is the surface of the current collector component 4 facing the first surface 51 along the thickness direction Z, which is also the surface of the current collector component 4 closest to the first surface 51 along the thickness direction Z. The second surface 42 can be a plane perpendicular to the thickness direction Z. The second surface 42 and the first surface 51 can be set with a gap or in contact with each other.

The electrode terminal 3 protrudes from the second surface 42, which can be that the electrode terminal 3 partially protrudes from the second surface 42. For example, the second surface 42 is provided with a groove, and a part of the electrode terminal 3 is accommodated in the groove, while the other part of the electrode terminal 3 protrudes from the second surface 42. It can also be that electrode terminal 3 protrudes from the second surface 42 entirely, for example, as shown in FIG. 5, electrode terminal 3 abuts against the second surface 42.

If S₁/S₂ is less than 0.25, the contact area between the second surface 42 and the first surface 51 is smaller during the deformation of the current collector component 4. After the deformation of the current collector component 4, it is squeezed against the insulating member 5, which causes the insulating member 5 to deform and causes the current collector component 4 to deform continuously, thereby increasing the deformation of the current collector component 4, which makes the insulating member 5 have poor limiting ability on the current collector component 4. If S₁/S₂ is larger than 0.8, the radial size of the current collector component 4 is larger. After the central area of the current collector component 4 is subjected to the squeezing force of the electrode terminal 3, the degree of warping of the outer edge 41 of the current collector component 4 increases, and the deformation of the area of the outer edge 41 of the current collector component 4 increases, resulting in an increased risk of misalignment of the positive and negative electrodes of the electrode assembly 2.

In this embodiment, a value of 0.25 ≤ S₁/S₂ ≤ 0.8 can make the insulating member 5 better limit the current collector component 4 to reduce the deformation of the current collector component 4.

In some embodiments, 0.4 ≤ S₁/S₂ ≤ 0.6.

S₁/S₂ can be 0.4, 0.42, 0.45, 0.47, 0.5, 0.52, 0.55, 0.57, 0.6, etc.

In this embodiment, the value of 0.4 ≤ S₁/S₂ ≤ 0.6 can further reduce the deformation of the current collector component 4.

In some embodiments, the first surface 51 is configured to abut against the current collector component 4 when the current collector component 4 deforms in a direction close to the wall portion 111.

In this embodiment, it can be that a gap is set between the current collector component 4 and the first surface 51 along the thickness direction Z, or it can be that the current collector component 4 abuts against the first surface 51 along the thickness direction Z.

When the current collector component 4 is subjected to a compressional force from the electrode terminal 3, the part of the current collector component 4 located around the electrode terminal 3 deforms towards the direction near the wall portion 111, and the first surface 51 can provide support for the current collector component 4, thereby limiting further deformation of the current collector component 4 and achieving the goal of reducing deformation of the current collector component 4.

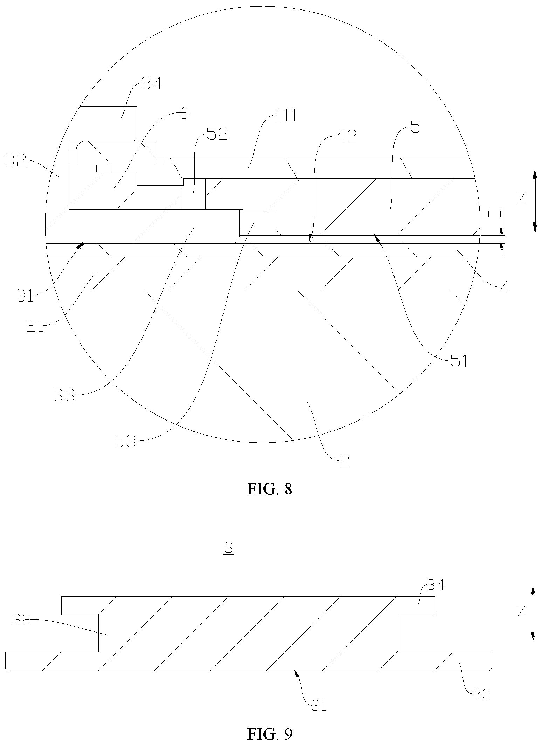

In some embodiments, referring to FIG. 8, FIG. 8 is a partial enlarged view of the A position of the battery cell 10 shown in FIG. 5. Along the thickness direction Z, the electrode terminal 3 has a third surface 31 facing and closest to the current collector component 4, wherein the third surface 31 is configured to abut against the current collector component 4, and the third surface 31 is closer to the current collector component 4 than the first surface 51.

The first surface 31 is the surface of electrode terminal 3 facing the current collector component 4 along the thickness direction Z, which is also the surface of electrode terminal 3 closest to the current collector component 4 along the thickness direction Z. The third surface 31 can be a plane perpendicular to the thickness direction Z. For example, the third surface 31 abuts against the second surface 42 of the current collector component 4 facing and closest to the first surface 51.

Due to the fact that the third surface 31 is closer to the current collector component 4 than the first surface 51, the third surface 31 of the electrode terminal 3 can contact with the current collector component 4, thereby reducing the risk that the third surface 31 of the electrode terminal 3 cannot contact with the current collector component 4 due to the interference between the current collector component 4 and the insulating member 5.

In some embodiments, continuing to refer to FIG. 8, along the thickness direction Z, the current collector component 4 has a second surface 42 facing and closest to the first surface 51, and the electrode terminal 3 protrudes from the second surface 42. The distance between the second surface 42 and the first surface 51 is D, which satisfies 0 ≤ D ≤ 0.5mm.

D can be 0, 0.1mm, 0.2mm, 0.3mm, 0.4mm, or 0.5mm. Understandably, if D=0, the first surface 51 abuts against the second surface 42. If D>0, a gap is set between the first surface 51 and the second surface 42.

If D>0.5mm, the distance between the first surface 51 and the second surface 42 is larger, and there is more space for the current collector component 4 to deform in the direction close to the wall portion 111 between the first surface 51 and the second surface 42, resulting in a larger deformation of the current collector component 4 in the direction close to the wall portion 111. In addition, the distance between the first surface 51 and the second surface 42 is relatively large, which creates a larger gap between the current collector component 4 and the insulating member 5, thereby reducing the size of the electrode assembly 2 in the thickness direction Z and affecting the energy density of the battery cell 10.

In this embodiment, 0 ≤ D ≤ 0.5mm, which reduces the distance between the first surface 51 and the second surface 42, so that the current collector component 4 can abut against the first surface 51 with just a small deformation in a direction close to the wall portion 111, so as to limit the further deformation of the current collector component 4, reduce the deformation of the current collector component 4, and make the internal structure of the battery cell 10 more compact, thereby improving the utilization rate of the internal space of the battery cell 10, which is conducive to improving the energy density of the battery cell 10.

In some embodiments, referring to FIGS. 8 and 9, FIG. 9 is a structural schematic view of the electrode terminal 3 shown in FIG. 5. The electrode terminal 3 includes a body part 32, a first limit part 33, and a second limit part 34. Along the thickness direction Z, the first limit part 33 and the second limit part 34 are respectively connected to the two ends of the body part 32; the first limit part 33 abuts against the current collector component 4; the body part 32 passes through the wall portion 111; the wall portion 111 is at least partially located between the first limit part 33 and the second limit part 34 to limit the relative movement of the electrode terminal 3 to the wall portion 111. The first surface 51 is arranged around the first limit part 33.

The body part 32, the first limit part 33, and the second limit part 34 can be an integrally molded structure. The body part 32, the first limit part 33, and the second limit part 34 form a riveting structure riveted to the wall portion 111. The body part 32, the first limit part 33, and the second limit part 34 can be of coaxially arranged cylindrical structures, with the diameter of the first limit part 33 and the diameter of the second limit part 34 both greater than the diameter of the body part 32.

The first limit part 33 is the part of the electrode terminal 3 connected to the current collector component 4. The first limit part 33 is located inside the shell 1, and the second limit part 34 is located outside the shell 1. The insulating member 5 is provided with a first through-hole 52 for the body part 32 to pass through, and the wall portion 111 is provided with a second through-hole for the body part 32 to pass through. For example, the diameter of the first limit part 33 is greater than the diameter of the second limit part 34.

To improve the sealing performance between electrode terminal 3 and wall portion 111, a sealing member 6 can be installed between electrode terminal 3 and wall portion 111. The sealing member 6 can be installed between the body part 32 and wall portion 111, and/or between the first limit part 33 and wall portion 111, and/or between the second limit part 34 and wall portion 111.

In this embodiment, the first surface 51 may be a circular surface surrounding the outer side of the first limit part 33. The inner diameter of the first surface 51 can be greater than or equal to the diameter of the first limit part 33.

The first surface 51 can limit the part of the current collector component 4 located around the first limit part 33. When the central area of the current collector component 4 is subjected to the squeezing force of the first limit part 33, the part of the current collector component 4 located around the first limit part 33 deforms towards the direction near the wall portion 111. The first surface 51 can provide support for the part of the current collector component 4 located around the first limit part 33, so as to reduce the deformation of the part of the current collector component 4 located around the first limit part 33 towards the direction near the wall portion 111.

In some embodiments, referring to FIG. 8 continuously, the insulating member 5 is provided with a concave part 53, which is recessed from the first surface 51 in a direction away from the current collector component 4, and at least a portion of the first limit part 33 is accommodated within the concave part 53.

The concave part 53 can be a circular groove, a rectangular groove, or the like arranged on the first surface 51. The concave part 53 is communicated with the first through-hole 52 of the insulating member 5. For example, the concave part 53 is a circular groove, which can be coaxially arranged with the first through-hole 52. The diameter of the concave part 53 is larger than the aperture of the first through-hole 52.

The first limit part 33 can be fully accommodated within the concave part 53. The first limit part 33 can also be partially accommodated within the concave part 53.

The setting of the concave part 53 on the insulating member 5 can, on the one hand, reduce the overall size of the insulating member 5 and the first limit part 33 in the thickness direction Z, thereby making the internal structure of the battery cell 10 more compact, improving the utilization rate of the internal space of the battery cell 10, and being conducive to improving the energy density of the battery cell 10. On the other hand, it can reduce the thickness of the part where the first limit part 33 protrudes from the first surface 51, reduce the distance between the current collector component 4 and the first surface 51, and enable the first surface 51 to better limit the deformation of the current collector component 4.

In some embodiments, referring to FIG. 8 continuously, along the thickness direction Z, the surface of the first limit part 33 that is away from the second limit part 34 is the third surface 31, wherein the third surface 31 abuts against the current collector component 4, and the third surface 31 is closer to the current collector component 4 than the first surface 51.

The third surface 31 is the surface of electrode terminal 3 closest to the current collector component 4 along the thickness direction Z.

In this embodiment, a portion of the first limit part 33 is located inside the concave part 53, and another portion is located outside the concave part 53. For example, the portion of the first limit part 33 protruding from the first surface 51 abuts against the second surface 42 of the current collector component 4, thereby achieving a gap set between the first surface 51 and the second surface 42.

In this embodiment, the third surface 31 is closer to the current collector component 4 than the first surface 51, which can reduce the risk of the third surface 31 of the electrode terminal 3 being unable to contact the current collector component 4 due to interference between the current collector component 4 and the insulating member 5.

In some embodiments, the first tab 21 is welded to the current collector component 4; and/or the electrode terminal 3 is welded to the current collector component 4. The welding connection between the first tab 21 and the current collector component 4 can ensure the firmness of the connection between the first tab 21 and the current collector component 4, and achieve stable current flow between the first tab 21 and the current collector component 4. The welding connection between the electrode terminal 3 and the current collector component 4 can ensure the firmness of connection between the electrode terminal 3 and the current collector component 4, and achieve stable current flow between the electrode terminal 3 and the current collector component 4.

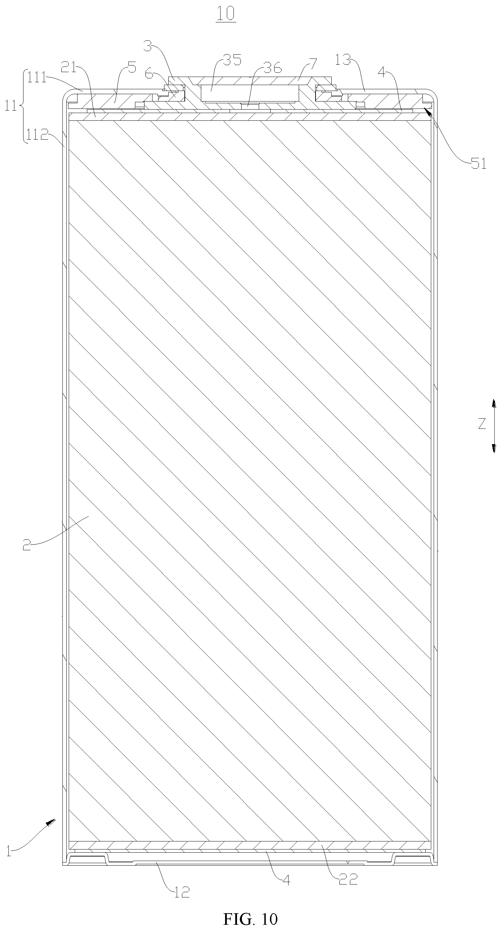

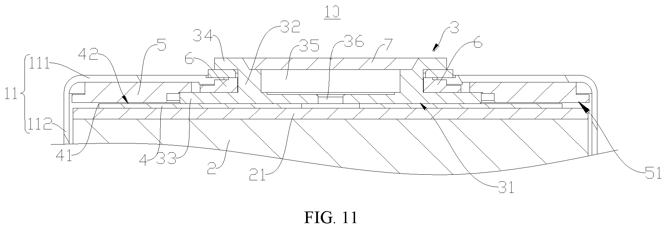

In some embodiments, referring to FIGS. 10 and 11, FIG. 10 is a schematic view of a structure of the battery cell 10 provided in some other embodiments of the present disclosure; and FIG. 11 is a partial view of the battery cell 10 shown in FIG. 10. The electrode terminal 3 is equipped with a step hole 35. Along the thickness direction Z, the step hole 35 is recessed from the surface of the electrode terminal 3 farthest away from the current collector component 4 towards the direction close to the current collector component 4. The electrode terminal 3 is located in the bottom area of the step hole 35 for welding with the current collector component 4.

By setting a step hole 35 on electrode terminal 3, the area where electrode terminal 3 needs to be welded to the current collector component 4 can be thinned. The electrode terminal 3 and the current collector component 4 can be welded through penetration welding, thereby improving the welding firmness between the electrode terminal 3 and the current collector component 4, and achieving stable current flow between the electrode terminal 3 and the current collector component 4.

For example, electrode terminal 3 is equipped with a liquid injection hole 36. Along the thickness direction Z, one end of the liquid injection hole 36 extends to the third surface 31 and the other end is communicated with the step hole 35. Electrolyte can be injected into the interior of the battery cell 10 through the liquid injection hole 36.

In the battery cell 10, a blocking member 7 can also be installed, which is located inside the step hole 35 to block the step hole 35. The blocking member 7 can be welded to the electrode terminal 3.

In some embodiments, continuing to refer to FIG. 10, the shell 1 may include a casing 11 and an end cover 12. The casing 11 includes a side wall 112 and a wall portion 111 integrally formed, with the side wall 112 surrounding the wall portion 111; along the thickness direction Z, the wall portion 111 is set at one end of the side wall 112, the other end of the side wall 112 forms an opening, and the end cover 12 closes the opening.

The end cover 12 and the casing 11 can be connected in various ways, such as welding and connecting by rolling and sealing. The casing 11 can form an integrated side wall 112 and wall portion 111 through stamping, stretching forming, and other methods. The electrode terminal 3 is connected to the first tab 21 through one current collector component 4, and the end cover 12 is connected to the second tab 22 through another current collector component 4.

When assembling the battery cell 10, the electrode terminal 3 can be installed on the wall portion 111 first, and the current collector component 4 can be welded to the first tab 21 of the electrode assembly 2. Then, the electrode assembly 2 and the current collector component 4 can be installed into the casing 11 through the opening of the casing 11. During the process of installing electrode component 2 and current collector component 4 into the casing 11, the central area of the current collector component 4 will be subjected to the compressional force from the electrode terminal 3, thereby causing the part of the current collector component 4 around the electrode terminal 3 to deform in the direction near the wall portion 111. The insulating member 5 can limit the deformation of the current collector component 4, reduce the deformation of the current collector component 4, and reduce the risk of misalignment between the positive and negative electrode plates of electrode assembly 2 due to the deformation of the current collector component 4 making the first tab 21 move.

In this embodiment, the electrode terminal 3 is set on the wall portion 111 integrally formed with the side wall 112 of the casing 11, which is not easy to cause separation between the wall portion 111 and the side wall 112 when the battery cell 10 is subjected to a force form the external components (such as the busbar component welded to electrode terminal 3).

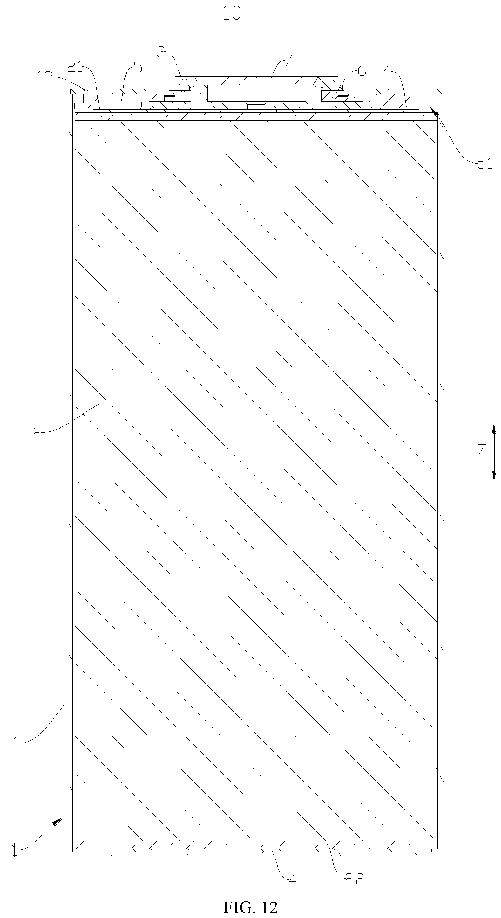

In some embodiments, referring to FIG. 12, FIG. 12 is a schematic view of a structure of the battery cell 10 provided in some other embodiments of the present disclosure. The shell 1 can include a casing 11 and an end cover 12. Along the thickness direction Z, one end of the casing 11 forms an opening, the end cover 12 closes the opening, and the end cover 12 is the wall portion 111.

The end cover 12 and the casing 11 can be connected in various ways, such as welding and connecting by rolling and sealing. For example, the electrode terminal 3 is connected to the first tab 21 through one current collector component 4, and the wall of the casing 11 opposite to the end cover 12 is connected to the second tab 22 through another current collector component 4.

In this embodiment, the electrode terminal 3 is set on the end cover 12 to improve the assembly efficiency of the battery cell 10.

In some embodiments, referring to FIGS. 10 and 12, the shell 1 is a cylindrical shell. The shell 1 of this structure can be suitable for cylindrical battery cell 10.

Understandably, the casing 11 of shell 1 is of a cylindrical structure.

The embodiment of the present disclosure provides a battery 100, which includes a battery cell 10 provided by any one of the above embodiments.

The embodiment of the present disclosure provides an electrical equipment, including a battery 100 provided by any one of the above embodiments.

In addition, continuing to refer to FIGS. 10 and 11, the embodiment of the present disclosure provides a cylindrical battery cell, comprising a shell 1, an electrode assembly 2, an electrode terminal 3, a current collector component 4, and an insulating member 5. Shell 1 is a cylindrical shell, which includes casing 11 and end cover 12. The casing 11 includes a side wall 112 and a wall portion 111 integrally formed, with the side wall 112 surrounding the wall portion 111; along the thickness direction Z of the wall portion 111, the wall portion 111 is set at one end of the side wall 112, the other end of the side wall 112 forms an opening, and the end cover 12 closes the opening. The electrode terminal 3 is set at the wall portion 111. The electrode assembly 2 is accommodated inside the shell 1, and the electrode assembly 2 has a first tab 21 and a second tab 22. The first tab 21 is connected to the electrode terminal 3 through one current collector component 4, and both the first tab 21 and the electrode terminal 3 are welded to the current collector component 4. The second tab 22 is connected to the end cover 12 through another current collector component 4. The insulating member 5 is arranged between the current collector component 4 and the wall portion 111, and is used to insulate and isolate the current collector component 4 and the wall portion 111.

Along the thickness direction Z, the insulating member 5 has a first surface 51 facing and close to the current collector component 4. The first surface 51 is configured to abut against the current collector component 4 when the current collector component 4 deforms in the direction near the wall portion 111. The outer diameter of the first surface 51 is greater than the diameter of the outer edge 41 of the current collector component 4, and the projection of the outer edge 41 of the current collector component 4 along the thickness direction Z is located within the first surface 51. Along the thickness direction Z, the current collector component 4 has a second surface 42 facing and closest to the first surface 51. The electrode terminal 3 abuts against the second surface 42, and the area of the overlap area C between the projection of the first surface 51 and the projection of the second surface 42 is S₁, and the area of the second surface 42 is S₂, with 0.25 ≤ S₁/S₂ ≤ 0.8. The gap is set between the second surface 42 and the first surface 51, and the distance between the second surface 42 and the first surface 51 is D ≤ 0.5mm.

The electrode terminal 3 includes a body part 32, a first limit part 33, and a second limit part 34. Along the thickness direction Z, the first limit part 33 and the second limit part 34 are respectively connected to the two ends of the body part 32. The surface of the first limit part 33 that is away from the second limit part 34 is the third surface 31, and the third surface 31 abuts against the second surface 42. The body part 32 passes through the wall portion 111, and the wall portion 111 is located partially between the first limit part 33 and the second limit part 34 to limit the movement of the electrode terminal 3 relative to the wall portion 111. The insulating member 5 is provided with a concave part 53, which is recessed from the first surface 51 in a direction away from the current collector component 4. The first limit part 33 is partially accommodated within the concave part 53, and the first surface 51 is a circular surface surrounding the outer side of the first limit part 33.

It should be noted that in the absence of conflicts, the embodiments and the features in the embodiments in the present disclosure can be combined with each other.

The above embodiment is only used to illustrate the technical solution of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A battery cell, comprising:
a shell, comprising a wall portion;
an electrode terminal, arranged on the wall portion;
an electrode assembly, arranged inside the shell, wherein the electrode assembly has a first tab;
a current collector component, connected to the first tab and the electrode terminal; and
an insulating member, arranged between the current collector component and the wall portion and configured to insulate and isolate the current collector component and the wall portion,
wherein along a thickness direction of the wall portion, the insulating member has a first surface facing and closest to the current collector component, and a projection of an outer edge of the current collector component is located within the first surface.

2. The battery cell according to claim 1, wherein a diameter of the outer edge of the current collector component is R₁, and an outer diameter of the first surface is R₂, where R₂ ≥ R₁.

3. The battery cell according to claim 1 or 2, wherein along the thickness direction, the current collector component has a second surface facing and closest to the first surface, with the electrode terminal protruding from the second surface, wherein an area of an overlap between a projection of the first surface and a projection of the second surface is S₁, and an area of the second surface is S₂, where 0.25 ≤ S₁/S₂ ≤ 0.8.

4. The battery cell according to claim 3, wherein 0.4 ≤ S₁/S₂ ≤ 0.6.

5. The battery cell according to any one of claims 1 to 4, wherein the first surface is configured to abut against the current collector component when the current collector component deforms in a direction close to the wall portion.

6. The battery cell according to any one of claims 1 to 5, wherein along the thickness direction, the electrode terminal has a third surface facing and closest to the current collector component, wherein the third surface is configured to abut against the current collector component, and the third surface is closer to the current collector component than the first surface.

7. The battery cell according to any one of claims 1 to 6, wherein along the thickness direction, the current collector component has a second surface facing and closest to the first surface, with the electrode terminal protruding from the second surface, wherein a distance between the second surface and the first surface is D, where 0 ≤ D ≤ 0.5mm.

8. The battery cell according to any one of claims 1 to 7, wherein the electrode terminal comprises a body part, a first limit part and a second limit part, wherein:
along the thickness direction, the first limit part and the second limit part are respectively connected to two ends of the body part; the first limit part abuts against the current collector component; the body part passes through the wall portion; the wall portion is at least partially located between the first limit part and the second limit part to limit a movement of the electrode terminal relative to the wall portion; and
the first surface is arranged around the first limit part.

9. The battery cell according to claim 8, wherein the insulating member is provided with a concave part, wherein the concave part is recessed from the first surface in a direction away from the current collector component, and at least a portion of the first limit part is accommodated within the concave part.

10. The battery cell according to claim 8 or 9, wherein along the thickness direction, a surface of the first limit part that is away from the second limit part is a third surface, wherein the third surface abuts against the current collector component, and the third surface is closer to the current collector component than the first surface.

11. The battery cell according to any one of claims 1 to 10, wherein the first tab is welded to the current collector component; and/or the electrode terminal is welded to the current collector component.

12. The battery cell according to any one of claims 1 to 11, wherein the shell comprises a casing and an end cover, wherein:
the casing comprises a side wall and the wall portion integrally formed, with the side wall surrounding the wall portion; and along the thickness direction, the wall portion is arranged at one end of the side wall, the other end of the side wall forms an opening, and the end cover closes the opening.

13. The battery cell according to any one of claims 1 to 11, wherein the shell comprises a casing and an end cover, wherein:
along the thickness direction, one end of the casing forms an opening, the end cover closes the opening, and the end cover is the wall portion.

14. The battery cell according to any one of claims 1 to 13, wherein the shell is a cylindrical shell.

15. A battery, comprising the battery cell according to any one of claims 1 to 14.

16. Electrical equipment, comprising the battery according to claim 15.
